# EUROPEAN PATENT SPECIFICATION

(11) **EP 2 302 248 B1**
(45) Date of publication and mention of the grant of the patent: **06.11.2013**
(21) Application number: 10176593.1
(22) Date of filing: 14.09.2010
(51) Int. Cl.: F16D 48/08, B60W 30/18, B60W 10/02, B60W 10/06

(54) **Clutch control apparatus**
Kupplungssteuervorrichtung
Appareil de contrôle d'embrayage

(30) Priority: 25.09.2009 JP 2009220307
(43) Date of publication of application: 30.03.2011
(73) Proprietor: AISIN SEIKI KABUSHIKI KAISHA, Kariya-shi, Aichi 448-8650 (JP)
(72) Inventor: Mase, Atsuhiro, Kariya-shi Aichi 448-8650 (JP); Hisaeda, Yusuke, Kariya-shi Aichi 448-8650 (JP)
(74) Representative: Kramer - Barske - Schmidtchen

(56) References cited:
- EP-A1- 1 610 022
- DE-A1- 10 009 504
- DE-A1- 10 250 729
- DE-A1- 19 841 917
- US-A1- 2002 074 173

## Description

### TECHNICAL FIELD

This disclosure relates to a clutch control apparatus. More particularly, this disclosure pertains to a clutch control apparatus for a vehicle having an automatic stop and start function for an internal combustion engine.

### BACKGROUND DISCUSSION

In response to a recent increasing awareness of environmental issues and exhaust emission regulations, a vehicle may be equipped with an automatic engine stop and start function (idling stop function) for automatically stopping an internal combustion engine when the vehicle is stopped and automatically starting the internal combustion engine when the vehicle is started. According to a vehicle having such automatic engine stop and start function and a manual transmission, in a case where a shift position (gear position) of the transmission is in a driving range and thus a clutch is in an engagement state (i.e., the internal combustion engine and driving wheels are directly connected), the internal combustion engine cannot be started by a starter motor because of a large inertia of rotational members constituting the clutch. Therefore, the shift position of the transmission in the neutral range is an automatic stop condition of the internal combustion engine to thereby prevent the inertia of the rotational members from increasing at a time of the restart of the internal combustion engine.

A technique related to the vehicle having the aforementioned automatic engine stop and start function is disclosed in JP2002-188480A (hereinafter referred to as Reference 1), for example. An automatic engine stop and start control apparatus disclosed in Reference 1 includes a controlling means determining an automatic stop condition and an automatic start condition of an engine that is mounted to a vehicle and that is connected to a transmission via a clutch. The controlling means controls the engine to automatically stop when the automatic stop condition is satisfied during the operation of the engine and controls the engine to automatically start when the automatic start condition is satisfied while the engine is in the automatically stopped state. The automatic stop condition is satisfied in a case where all requirements that a vehicle speed is equal to or smaller than a predetermined value excluding zero, an idling switch is turned on, and a shift position (i.e., a gear position) of the transmission is in the neutral range are achieved. The automatic start condition is satisfied in a case where at least one of requirements that the clutch is shifting from an engagement state or a half-engagement state to a disengagement state, the gear position is in a range other than the neutral range, the idling switch is turned off, and a booster negative pressure is in a predetermined state is achieved.

According to the automatic engine stop and start control apparatus disclosed in Reference 1, the engine is automatically started when the clutch is shifting from the engagement state or the half-engagement state to the disengagement state while the engine is in the stopped state. Thus, in response to a clutch pedal operation by which the start of the vehicle is not intended (for example, a driver of the vehicle depresses the clutch pedal by an idle stroke thereof), the engine is automatically started, thereby causing a sudden start of the vehicle by the engagement of the clutch. In addition, according to the automatic engine stop and start control apparatus disclosed in Reference 1, the gear position of the transmission in the neutral range is a necessary condition for the automatic stopping of the vehicle so as to be ready for the restart of the engine. Thus, when a driver of the vehicle maintains the gear position (shift position) in the driving range other than the neutral range when the vehicle is stopped, the engine (internal combustion engine) is prevented from being automatically stopped, which fails to obtain an improvement of fuel efficiency. Further, according to the automatic engine stop and start control apparatus disclosed in Reference 1, in a case where the clutch is shifting from the engagement state or the half-engagement state to the disengagement state or the gear position is shifting to the range other than the neutral range, for example, while the engine is in the stopped state, the engine is automatically started. As a result, wasting fuel may be inevitable for a predetermined time period between each of the aforementioned operations and the start of the vehicle.
DE 100 09 504 Al discloses a clutch control apparatus wherein a creep operation is performed after a restart of a start/stop function. Restart can be performed based on the actuation of the accelerator or break pedal. The clutch control apparatus does not include any clutch pedal.
EP 1 610 022 A1 discloses controlling a clutch actuator in a manual or automatic mode depending on the combined operation of the clutch and the accelerator pedal. When the two pedals are operated the clutch is in a manual mode. When only the accelerator pedal is operated the clutch is controlled in an automatic mode.

A need thus exists for a clutch control apparatus that can prevent a sudden start of a vehicle in a case where the vehicle start is not intended, while improving fuel efficiency.

### SUMMARY

According to an aspect of this disclosure, a clutch control apparatus mountable at a vehicle where a clutch is arranged at a power transmission passage between a transmission and an internal combustion engine that is driven on a basis of an operation of an acceleration pedal, the clutch control apparatus controlling the clutch, the clutch control apparatus includes a controlling portion controlling the internal combustion engine which is in a stopped state to automatically start in a case where a shift position of the transmission is not in a neutral range, and either a clutch pedal that operates the clutch to be in a connection state and a disconnection state is shifting from a disengagement state to an engagement state, the acceleration pedal is depressed, or a braking of the vehicle is shifting from a braking state to a release state. The controlling portion controls a clutch actuator which is separately provided from the clutch pedal in response to a depression of the acceleration pedal at a time the clutch pedal is shifting to the engagement state after the internal combustion engine is automatically started, so that the operations of the clutch pedal and the clutch actuator are synchronized with each other. Further, the controlling portion controls the clutch actuator to achieve a creep start of the vehicle in a case where the acceleration pedal is not depressed at a time the clutch pedal is shifting to the engagement state after the internal combustion engine is automatically started.

The clutch control apparatus further includes an operation passage between the clutch and the clutch actuator to transmit an operational force of the clutch actuator to the clutch. The operation passage is prevented from being provided between the clutch and the clutch pedal for transmitting an operational force of the clutch pedal to the clutch.

The clutch control apparatus further includes an operation passage switching device that switches between first and second operation passages to transmit an operational force of either the clutch pedal or the clutch actuator to the clutch. The operation passage switching device selects the second operation passage transmitting the operational force of the clutch pedal to the clutch in a case where a power supply of the clutch actuator is turned off and selects the first operation passage transmitting the operational force of the clutch actuator to the clutch in a case where the power supply of the clutch actuator is turned on.

The clutch control apparatus further includes a third operation passage between the clutch and the clutch actuator to transmit an operational force of the clutch actuator to the clutch and a fourth operation passage between the clutch and the clutch pedal to transmit an operational force of the clutch pedal to the clutch. The clutch is operated on a basis of the operational force of either the clutch actuator or the clutch pedal whichever operates the clutch further in the disengagement state.

The controlling portion determines whether the power supply of the clutch actuator is turned on in a case where the acceleration pedal is not depressed, and controls the power supply of the clutch actuator to be turned on in a state where the power supply of the clutch actuator is turned off.

The controlling portion determines whether the power supply of the clutch actuator is turned off in a case where the acceleration pedal is depressed, and controls the power supply of the clutch actuator to be turned off in a state where the power supply of the clutch actuator is turned on.

According to the aforementioned disclosure, whether or not a driver of the vehicle intends to start the vehicle is determined at the restart of the internal combustion engine to thereby control a torque transmission from the internal combustion engine to the transmission by the clutch actuator. Thus, a sudden start of the vehicle in a case where the driver does not intend to start the vehicle (i.e., the acceleration pedal is not depressed) is avoidable. In addition, the internal combustion engine in the stopped state is started while the shift position is in the driving range, not in the neutral range. Therefore, fuel consumption in association with the shift operation upon the vehicle start may decrease. Further, the driver is able to start the vehicle in substantially the same way as the creep driving of an automatic transmission vehicle only by a rough operation of the clutch pedal. As a result, the necessary operation of the clutch pedal in a traffic jam and the like may decrease and a beginner driver of the manual transmission vehicle may be assisted accordingly.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a diagram illustrating a structure of a clutch control apparatus according to a first embodiment disclosed here;

Fig. 2 is a flowchart schematically illustrating an operation of the clutch control apparatus according to the first embodiment;

Fig. 3 is a time chart illustrating the operation of the clutch control apparatus in a case where an acceleration pedal is operated at a restart of an engine according to the first embodiment;

Fig. 4 is a time chart illustrating the operation of the clutch control apparatus in a case where the acceleration pedal is not operated at the restart of the engine according to the first embodiment;

Fig. 5 is a diagram illustrating an operation of the clutch control apparatus according to a second embodiment disclosed here;

Fig. 6 is a flowchart schematically illustrating the operation of the clutch control apparatus according to the second embodiment;

Fig. 7 is a diagram illustrating a structure of the clutch control apparatus according to a third embodiment disclosed here; and

Fig. 8 is a flowchart schematically illustrating an operation of the clutch control apparatus according to the third embodiment.

### DETAILED DESCRIPTION

Embodiments will be explained with reference to the attached drawings. A clutch control apparatus according to each of the embodiments is mounted to a vehicle where a clutch is arranged at a power transmission passage between an internal combustion engine and a transmission so as to control the clutch. The clutch control apparatus controls the internal combustion engine, which is in a stopped state, to automatically start in a case where a shift position of the transmission is not in the neutral range, and either a clutch pedal that operates the clutch to be in a connection state and a disconnection state is shifting from a disengagement state to an engagement state, an acceleration pedal is depressed, or a braking of the vehicle is shifting from a braking state to a release state. Afterwards, the clutch control apparatus controls a clutch actuator, separately provided from the clutch pedal, in response to a depression of the acceleration pedal at a time the clutch pedal is shifting to the engagement state. Alternatively, the clutch control apparatus controls the clutch actuator so that a creep start of the vehicle is obtained in a case where the acceleration pedal is not depressed at a time the clutch pedal is shifting to the engagement state.

### [First embodiment]

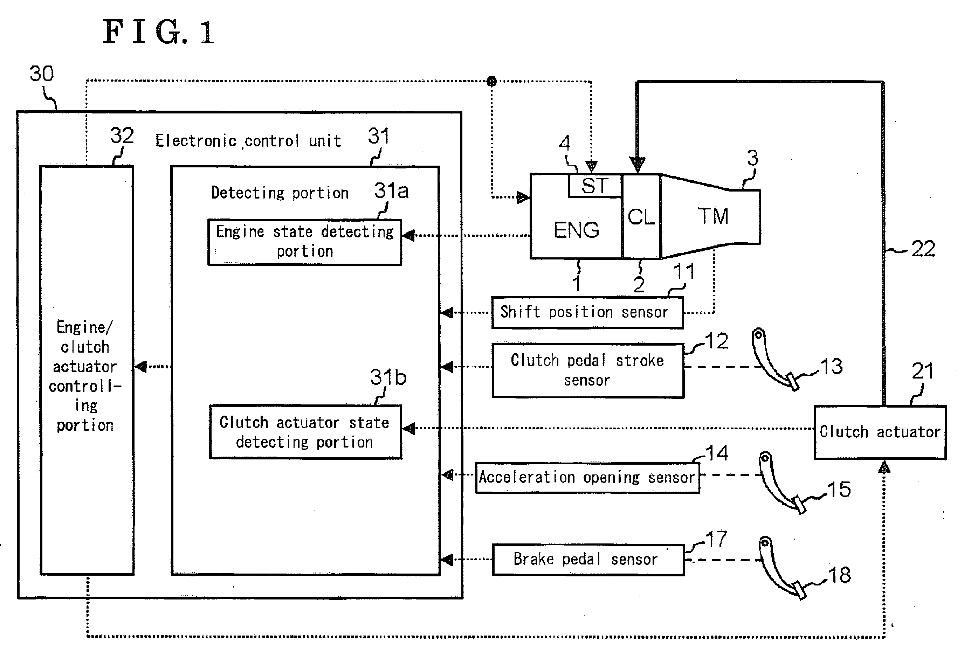

The clutch control apparatus according to a first embodiment will be explained with reference to Fig. 1.

The clutch control apparatus, which is mounted at a vehicle where a clutch 2 is arranged at a power transmission passage between an engine 1 serving as an internal combustion engine and a transmission 3, controls the clutch 2 to be either in an engagement state or in a disengagement state. The clutch control apparatus includes an automatic engine stop and start function so as to control the engine 1, which is rotating, to automatically stop when a stop condition is satisfied and to control the engine 1, which is stopped, to automatically start when a start condition is satisfied. The clutch control apparatus according to the present embodiment includes an electronic control unit 30 serving as a controlling portion that controls the engine 1, a starter motor 4 starting the engine 1, and a clutch actuator 21 operating the clutch 2, depending on various conditions of the vehicle. The clutch control apparatus further includes a clutch operation passage 22, which will be explained later, serving as an operation passage. The vehicle equipped with the clutch control apparatus includes, as main structures, the engine 1, the clutch 2, the transmission 3, the starter motor 4, a shift position sensor 11, a clutch pedal stroke sensor 12, a clutch pedal 13, an acceleration opening sensor 14, an acceleration pedal 15, the clutch actuator 21, the clutch operation passage 22, and the electronic control unit 30.

The engine 1 is the internal combustion engine outputting a rotational power by means of combustion of fuel (for example, hydrocarbon system such as gasoline and light fuel oil). The engine 1 is started by a driving of the starter motor 4. The rotational power of the engine 1 is transmitted to the clutch 2. The engine 1 includes various sensors such as an engine speed sensor, an actuator for driving an injector, a throttle valve, and the like, an ignition device, and the like. The engine 1 is connected to the electronic control unit 30 so that a communication therebetween is available and is controlled by the electronic control unit 30.

The clutch 2 is arranged at the power transmission passage between the engine 1 and the transmission 3. The clutch 2 connects or disconnects the rotational power of the engine 1 relative to the transmission 3. The clutch 2 is brought in the connection state or the disconnection state by the clutch actuator 21 via the clutch operation passage 22.

The transmission 3 includes a gear mechanism that changes a speed of the rotational power input from the engine 1 via the clutch 2 and that outputs the resulting rotational power to driving wheels. A gear range of the transmission 3 is changeable by a manual operation or an automatic operation. The transmission 3 is a parallel axis gear type transmission having five forward stages and one backward stage, for example. The transmission 3 includes multiple speed change gear trains.

The starter motor 4 is an electrical motor that drives and starts the engine 1. The starter motor 4 is connected to the electronic control unit 30 so that a communication therebetween is available and is controlled by the electronic control unit 30.

The shift position sensor 11 detects a shift position (i.e., a gear range) of the transmission 3 (or a position of a shift lever provided at a driver seat). The shift position sensor 11 is electrically connected to the electronic control unit 30.

The clutch pedal stroke sensor 12 detects a position of the clutch pedal 13 (which corresponds to a stroke of the clutch pedal 13) provided at the driver seat. The clutch pedal stroke sensor 12 is electrically connected to the electronic control unit 30.

The clutch pedal 13 is a step-in type pedal provided for bringing the clutch 2 in the connection state or the disconnection state. The clutch pedal 13 is provided in the vicinity of feet of the driver seated on the driver seat.

The acceleration opening sensor 14 is a sensor such as a stroke sensor and an angle sensor that detects an amount of depression (which corresponds to an acceleration opening) of the acceleration pedal 15 at the driver seat. The acceleration opening sensor 14 is electrically connected to the electronic control unit 30.

The acceleration pedal 15 is a step-in type pedal for accelerating the engine 1. The acceleration pedal 15 is provided in the vicinity of feet of the driver seated on the driver seat.

A brake pedal sensor 17 detects a position of a brake pedal 18 (which corresponds to a stroke thereof) provided at the driver seat. The brake pedal sensor 17 is electrically connected to the electronic control unit 30.

The brake pedal 18 is a step-in type pedal for performing a braking operation and is provided in the vicinity of feet of the driver seated on the driver seat.

The clutch actuator 21 operates the clutch 2 in the connection state or the disconnection state via the clutch operation passage 22. The clutch actuator 21 includes an electrical motor serving as a driving source, and a sensor detecting an operation state of the clutch 2 (a stroke sensor, an angle, sensor, and the like). The clutch actuator 21 is connected to the electronic control unit 30 so that a communication therebetween is available and is controlled by the electronic control unit 30.

The clutch operation passage 22 is a passage (i.e., a mechanism or an oil passage) transmitting an operational force of the clutch actuator 21 to the clutch 2.

The electronic control unit 30 is a computer for controlling the engine 1, the starter motor 4, and the clutch actuator 21 based on a program. Various sensors, an actuator incorporated within the engine 1 (for example, an actuator driving an injector and a throttle valve), an ignition device, the starter motor 4, and the electrical motor of the clutch actuator 21 are electrically or communicably connected to the electronic control unit 30. The aforementioned various sensors include a sensor incorporated within the engine 1 (for example, an engine speed sensor), the shift position sensor 11, the clutch pedal stroke sensor 12, the acceleration opening sensor 14, the brake pedal sensor 17, and the sensor incorporated within the clutch actuator 21 (for example, a stroke sensor and an angle sensor). The electronic control unit 30 executes the program to thereby achieve a detecting portion 31 and an engine/clutch actuator controlling portion 32.

The detecting portion 31 detects a state of a vehicle and includes an engine state detecting portion 31a and a clutch actuator state detecting portion 31b. The engine state detecting portion 31a detects an operation state of the engine 1 (i.e., ON/OFF state) based on a signal sent from the engine 1. The clutch actuator state detecting portion 31b detects an operation state of the clutch actuator 21 based on a signal sent from the clutch actuator 21. The detecting portion 31 detects the shift position of the transmission 3 based on a signal from the shift position sensor 11, the stroke of the clutch pedal 13 based on a signal from the clutch pedal stroke sensor 12, the acceleration opening based on a signal from the acceleration opening sensor 14, and the stroke of the brake pedal 18 based on a signal from the brake pedal sensor 17. The detecting portion 31 outputs information related to the detected state of the vehicle to the engine/clutch actuator controlling portion 32.

The engine/clutch actuator controlling portion 32 performs information processing based on information related to the state of the vehicle transmitted from the detecting portion 31. The engine/clutch actuator controlling portion 32 then outputs a control signal based on the aforementioned information processing to the engine 1, the starter motor 4, and the clutch actuator 21. The engine/clutch actuator controlling portion 32 controls the engine 1 to stop automatically in a case where the acceleration pedal 15 is not depressed and the engine speed is equal to or smaller than a predetermined value (which is greater than zero). After the engine stops, in a case where the engine 1 is directly connected to the driving wheels (i.e., the shift position of the transmission 3 is in the driving range and the clutch pedal 13 is not depressed), the engine/clutch actuator controlling portion 32 controls the clutch actuator 21 so that the clutch 2 is brought to the disconnection state from the connection state for the purpose of preparing for the restart of the engine 1. The engine/clutch actuator controlling portion 32 restarts the engine 1 in a case where the shift position is in the driving range and the clutch pedal 13 is shifting from the disengagement state to the engagement state after the engine stops. In addition, the engine/clutch actuator controlling portion 32 controls the clutch actuator 21 so that operations of the clutch pedal 13 and the clutch actuator 21 are synchronized with each other in a case where the acceleration pedal 15 is depressed after the engine 1 is restarted in a state where the clutch pedal 13 is shifting from the disengagement state to the engagement state. Alternatively, the engine/clutch actuator controlling portion 32 controls the clutch actuator 21 so that the creep start of the vehicle is obtained in a case where the acceleration pedal 15 is not depressed after the engine 1 is restarted in a state where the clutch pedal 13 is shifting from the disengagement state to the engagement state. Further, in a case where the shift position in the driving range, the clutch pedal 13 in the disengagement state, and the depression of the acceleration pedal 15 are all obtained, the engine/clutch actuator controlling portion 32 restarts the engine 1.

The electronic control unit 30 obtains information of the engine 1 related to the state of the vehicle necessary for the control such as the acceleration opening and the engine speed and then performs a calculation based on the program specified beforehand. The electronic control unit 30 controls the actuator for the injector and the igniter, and the ignition device incorporated within the engine 1.

The electronic control unit 30 obtains information of the clutch 2 related to the state of the vehicle necessary for the control such as the clutch actuator stroke, the clutch pedal stroke, and the shift position and performs a calculation based on the program specified beforehand, thereby controlling the clutch actuator 21.

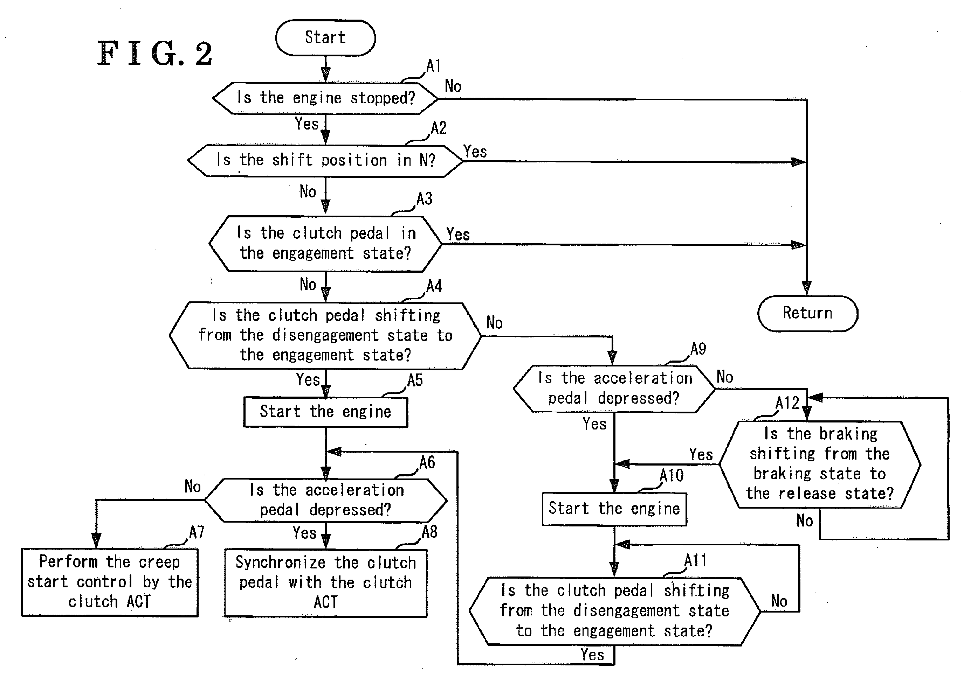

Next, an operation of the clutch control apparatus according to the first embodiment will be explained with reference to Fig. 2. Fig. 2 is a flowchart schematically illustrating the operation of the clutch control apparatus according to the first embodiment.

The electronic control unit 30 determines whether or not the engine 1 is stopped in step A1. In a case where the engine 1 is not stopped, a flow operation returns to step A1 (i.e., the flow operation repeats step A1).

In a case where the engine 1 is stopped (Yes in step A1), the electronic control unit 30 then determines whether or not the shift position of the transmission 3 is in the neutral range in step A2. In a case where the shift position is in the neutral range, the flow operation returns to step A1.

In a case where the shift position is not in the neutral range (No in step A2), the electronic control unit 30 then determines whether or not the clutch pedal 13 is in the engagement state in step A3. When the clutch pedal 13 is in the engagement state, the flow operation returns to step A1.

In a case where the clutch pedal 13 is not in the engagement state (No in step A3), the electronic control unit 30 then determines whether or not the clutch pedal 13 is shifting from the disengagement state to the engagement state in step A4. When the clutch pedal 13 is not shifting from the disengagement state to the engagement state (i.e., the clutch pedal is in the disengagement state), the flow operation proceeds to step A9.

In a case where the clutch pedal 13 is shifting from the disengagement state to the engagement state (Yes in step A4), the electronic control unit 30 controls the engine 1 and the starter motor 4 so that the engine 1 is started in step A5. After the start of the engine 1, the flow operation proceeds to step A6.

After step A5, or in a case where the clutch pedal 13 is shifting from the disengagement state to the engagement state (Yes in step A11), the electronic control unit 30 determines whether or not the acceleration pedal 15 is depressed in step A6. When the acceleration pedal 15 is depressed, the flow operation proceeds to step A8.

When the acceleration pedal 15 is not depressed (No in step A6), the electronic control unit 30 controls the clutch actuator 21 (and possibly the engine 1) so that the creep start of the vehicle is obtained in step A7. The flow operation is thereafter terminated.

In a case where the acceleration pedal 15 is depressed (Yes in step A6), the electronic control unit 30 controls the clutch actuator 21 so that the operations of the clutch pedal 13 and the clutch actuator 21 are synchronized with each other in step A8. The flow operation is thereafter terminated.

In a case where the clutch pedal 13 is not shifting from the disengagement state to the engagement state (i.e., the clutch pedal 13 is in the disengagement state) (No in step A4), the electronic control unit 30 determines whether or not the acceleration pedal 15 is depressed in step A9. When it is determined that the acceleration pedal 15 is not depressed, the flow operation proceeds to step A12.

When it is determined that the acceleration pedal 15 is depressed or the brake pedal 18 is operated from an ON state to an OFF state (i.e., a braking of the vehicle is shifting from a braking state to a release state (Yes in step A12), the electronic control unit 30 controls the engine 1 and the starter motor 4 so that the engine 1 is started in step A10.

After step A10 or when the clutch pedal 13 is not shifting from the disengagement state to the engagement state (No in step A11), the electronic control unit 30 determines whether or not the clutch pedal 13 is shifting from the disengagement state to the engagement state in step A11. When the clutch pedal 13 is not shifting from the disengagement state to the engagement state (i.e., the clutch pedal 13 is in the disengagement state), the flow operation returns to step A11 (i.e., the flow operation repeats step A11). On the other hand, in a case where the clutch pedal 13 is shifting from the disengagement state to the engagement state (Yes in step A11), the flow operation proceeds to step A6.

In a case where the acceleration pedal 15 is not depressed (No in step A9) or the braking of the vehicle is not shifting from the braking state to the release state (No in step A12), the electronic control unit 30 determines whether or not the braking of the vehicle is shifting from the braking state to the release state in step A12. When the braking of the vehicle is not shifting from the braking state to the release state, the flow operation returns to step A12 (i.e., the flow operation repeats step A12). On the other hand, when the braking of the vehicle is shifting from the braking state to the release state, the flow operation proceeds to step A10.

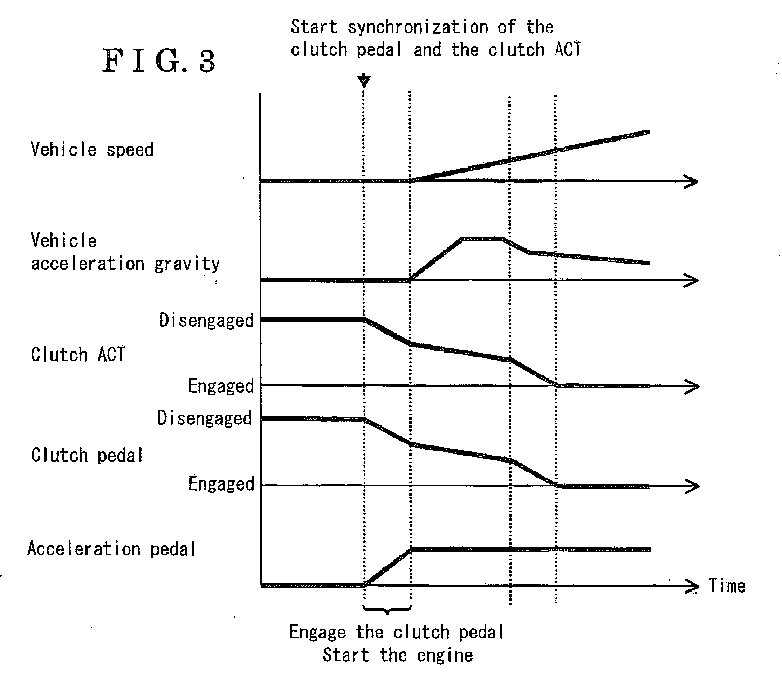

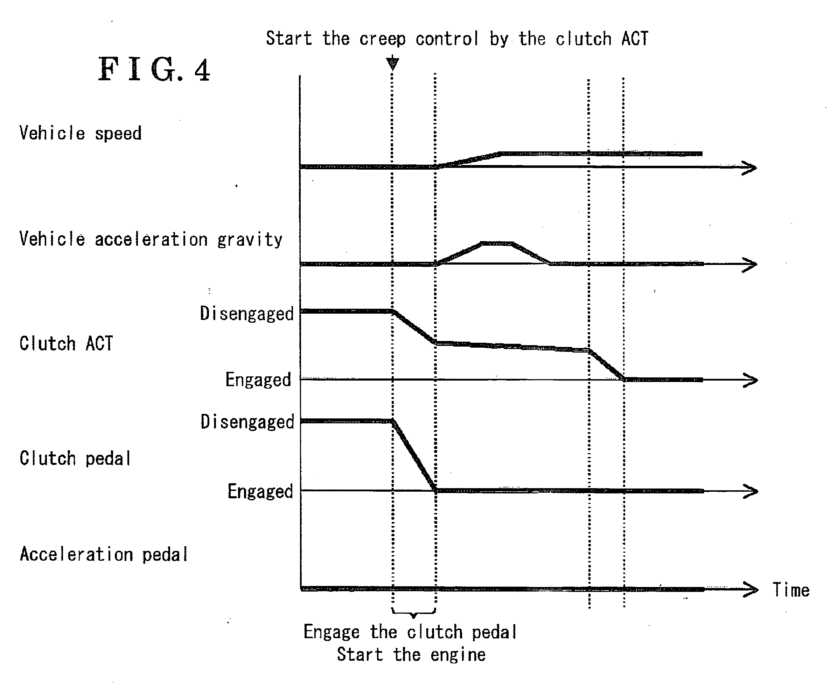

Next, an operation of the clutch control apparatus at a start of the engine according to the first embodiment will be explained with reference to Figs. 3 and 4. Fig. 3 is a time chart illustrating the operation of the clutch control apparatus in a case where the acceleration pedal 15 is depressed at a restart of the engine 1. Fig. 4 is a time chart illustrating the operation of the clutch control apparatus in a case where the acceleration pedal 15 is not depressed at the restart of the engine 1 according to the first embodiment.

In Figs. 3 and 4, the shift position of the transmission 3 is not in the neutral range and the braking of the vehicle is in the release state. Fig. 3 illustrates a case where the driver intends to start the vehicle because of the depression of the acceleration pedal 15.

Fig. 4 illustrates the idle stroke of the clutch pedal 13, the idling start, and the like.

In an initial state of the time chart illustrated in Fig. 3, the automatic start control of the engine 1 is initiated while the stop condition of the engine 1 is satisfied so that the engine 1 is automatically stopped and the vehicle is stopped. At this time, the engine 1 is stopped and the shift position of the transmission 3 is not in the neutral range. In addition, the clutch pedal 13 is in the disengagement state and not shifting from the disengagement state to the engagement state, and the acceleration pedal 15 is not depressed. Therefore, the flow operation in Fig. 2 proceeds to step A1, step A2, step A3, step A4, step A9 and step A12. The flow operation repeats step A12 until the braking of the vehicle is shifting from the braking state to the release state. In the aforementioned initial state, the engine 1 is not started and a specific control is not performed on the clutch actuator 21. Thus, the clutch actuator 21 is synchronized with the clutch pedal 13 so as to bring the clutch 2 in the disconnection state.

After the aforementioned initial state, the clutch pedal 13 is shifting from the disengagement state to the engagement state, and the acceleration pedal 15 is depressed. Thus, the flow operation in Fig. 2 proceeds to step A1, step A2, step A3, step A4, and step A5 to thereafter start the engine 1. At this time, because the acceleration pedal 15 is depressed, it is assumed that the driver intends to start the vehicle. After step A5 in Fig. 2, the flow operation proceeds to step A6 and step A8 to maintain the clutch actuator 21 to be synchronized with the clutch pedal 13. The clutch 2 is operated by following the operation of the clutch pedal 13 by the driver of the vehicle. As a result, the vehicle is started as intended by the driver.

In Fig. 4, an initial state of the time chart illustrated therein is the same as that of Fig. 3. After the initial state, because the clutch pedal 13 is shifting from the disengagement state to the engagement state without the operation of the acceleration pedal 15, the flow operation in Fig. 2 proceeds to step A1, step A2, step A3, step A4, and step A5 to start the engine 1. At this time, because the acceleration pedal 15 is not depressed, it is assumed that the driver of the vehicle depresses the clutch pedal 13 by the idle stroke thereof or the driver desires the acceleration of the vehicle that may correspond to the creep start of an automatic transmission vehicle. After step A5 in Fig. 2, the flow operation proceeds to step A6 and step A7 to initiate the creep start control by the clutch actuator 21. At this time, because the clutch 2 can only transmit a torque for performing the creep start, a sudden start of the vehicle caused by the idle stroke of the clutch pedal 13 is avoidable. In addition, in a case of a traffic jam, the driver is able to start the vehicle by the creep start, only by a rough operation of the clutch pedal 13.

According to the first embodiment, whether or not the driver intends to start the vehicle is determined at the restart of the engine 1 to thereby control the torque transmission from the engine 1 to the transmission 3 by the clutch actuator 21. Thus, a sudden start of the vehicle in a case where the driver does not intend to start the vehicle (i.e., the acceleration pedal 15 is not depressed) is avoidable. In addition, according to the first embodiment, the engine 1 in the stopped state is started while the shift position is in the driving range, not in the neutral range. Therefore, fuel consumption in association with the shift operation upon the vehicle start may decrease. Further, according to the first embodiment, the driver is able to start the vehicle in substantially the same way as the creep driving of the automatic transmission vehicle only by the rough operation of the clutch pedal 13. As a result, the necessary operation of the clutch pedal in a traffic jam and the like may decrease and a beginner driver of the manual transmission vehicle may be assisted accordingly.

### [Second embodiment]

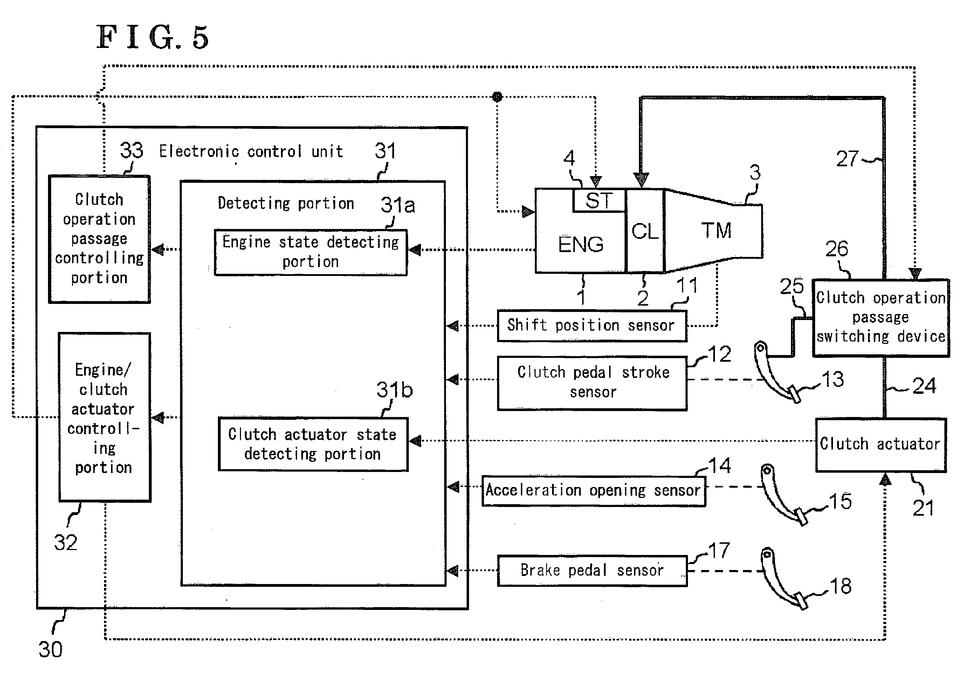

A second embodiment will be explained with reference to Fig. 5. Fig. 5 is a diagram schematically illustrating a structure of the clutch control apparatus according to the second embodiment.

The second embodiment that is a modification of the first embodiment includes a clutch operation passage switching device 26 serving as an operation passage switching device and arranged between clutch operation passages 24, 25 and 27 so as to select either an operation from the clutch actuator 21 or an operation from the clutch pedal 13.

The clutch operation passage 24 is a passage (i.e., a mechanism or an oil passage) for transmitting an operational power of the clutch actuator 21 to the clutch operation passage switching device 26. The clutch operation passage 25 is a passage (i.e., a mechanism or an oil passage) for transmitting an operational power of the clutch pedal 13 to the clutch operation passage switching device 26. The clutch operation passage 27 is a passage (i.e., a mechanism or an oil passage) for transmitting an operational power of the clutch operation passage switching device 26 to the clutch 2.

The clutch operation passage switching device 26 chooses and switches the passage connected to the clutch operation passage 27 between the clutch operation passage 24 and the clutch operation passage 25. The clutch operation passage switching device 26 is communicably connected to the electronic control unit 30 and is controlled by the electronic control unit 30.

The electronic control unit 30 includes a clutch operation passage controlling portion 33 and controlling an operation of the clutch operation passage switching device 26. The clutch operation passage controlling portion 33 performs information processing based on information related to the state of the vehicle sent from the detecting portion 31. A control signal based on the aforementioned information processing is output to the clutch operation passage switching device 26 from the clutch operation passage controlling portion 33. The clutch operation passage controlling portion 33 controls the clutch operation passage switching device 26 so that the clutch operation passage 25 for the transmission of the operational force of the clutch pedal 13 is connected to the clutch operation passage 27 in a case where the clutch pedal 13 is being operated, for example. In addition, the clutch operation passage controlling portion 33 controls the clutch operation passage switching device 26 so that the clutch operation passage 24 for the transmission of the operational force of the clutch actuator 21 is connected to the clutch operation passage 27 in a case where a power supply of the clutch actuator 21 is turned on, for example.

The other structures of the second embodiment are the same as those of the first embodiment.

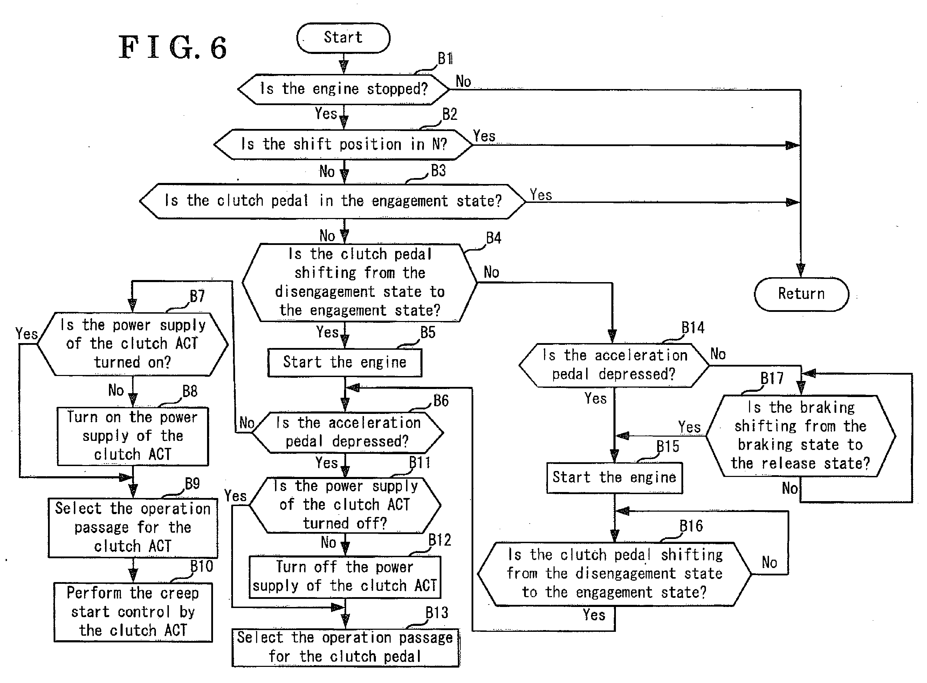

Next, an operation of the clutch control apparatus according to the second embodiment will be explained with reference to Fig. 6. Fig. 6 is a flowchart schematically illustrating the operation of the clutch control apparatus according to the second embodiment.

First, the electronic control unit 30 determines whether or not the engine 1 is stopped in step B1. When the engine 1 is not stopped (No in step B1), a flow operation returns to step B1 (i.e., the flow operation repeats step B1).

In a case where the engine 1 is stopped (Yes in step B1), the electronic control unit 30 then determines whether or not the shift position of the transmission 3 is in the neutral range in step B2. When the shift position is in the neutral range (Yes in step B2), the flow operation returns to step B1.

In a case where the shift position is not in the neutral range (No in step B2), the electronic control unit 30 then determines whether or not the clutch pedal 13 is in the engagement state in step B3. When the clutch pedal 13 is in the engagement state (Yes in step B3), the flow operation returns to step B1.

When the clutch pedal 13 is not in the engagement state (No in step B3), the electronic control unit 30 then determines whether or not the clutch pedal 13 is shifting from the disengagement state to the engagement state in step B4. When the clutch pedal 13 is not shifting from the disengagement state to the engagement state (i.e., in the disengagement state) (No in step B4), the flow operation proceeds to step B14.

In a case where the clutch pedal 13 is shifting from the disengagement state to the engagement state (Yes in step B4), the electronic control unit 30 controls the engine 1 and the starter motor 4 so as to start the engine 1 in step B5. After the start of the engine 1, the flow operation proceeds to step B6.

After step B5 or in a case where the clutch pedal is shifting from the disengagement state to the engagement state (Yes in step B16), the electronic control unit 30 determines whether or not the acceleration pedal 15 is depressed in step B6. When the acceleration pedal 15 is depressed (Yes in step B6), the flow operation proceeds to step B11.

In a case where the acceleration pedal 15 is not depressed (No in step B6), the electronic control unit 30 determines whether the power supply of the clutch actuator 21 is turned on in step B7. When the power supply of the clutch actuator 21 is turned on, the flow operation thereafter proceeds to step B9.

When the power supply of the clutch actuator 21 is not turned on (No in step B7), the controlling portion 30 controls the power supply of the clutch actuator 21 to be turned on in step B8. The flow operation thereafter proceeds to step B9.

When the power supply of the clutch actuator 21 is turned on (Yes in step B7) or after the process of step B8, the electronic control unit 30 controls the clutch operation passage switching device 26 so that the clutch operation passage 24 for the transmission of the operational force of the clutch actuator 21 is connected to the clutch operation passage 27.

After step B9, the electronic control unit 30 controls the clutch actuator 21 (and possibly the engine 1) so that the creep start of the vehicle is obtained in step B10. The flow operation is thereafter terminated.

In a case where the acceleration pedal 15 is depressed (Yes in step B6), the electronic control unit 30 then determines whether or not the power supply of the clutch actuator 21 is turned off in step B11. When the power supply of the clutch actuator 21 is turned off (Yes in step B11), the flow operation proceeds to step B13.

When the power supply of the clutch actuator 21 is not turned off (No in step B11), the power supply of the clutch actuator 21 is controlled to be turned off in step B12. The flow operation then proceeds to step B13.

When the power supply of the clutch actuator 21 is turned off (Yes in step B11), or after the process of step B12, the electronic control unit 30 controls the clutch operation passage switching device 26 so that the clutch operation passage 25 for the transmission of the operational force of the clutch pedal 13 is connected to the clutch operation passage 27 in step B13. The flow operation is then terminated.

In a case where the clutch pedal 13 is not shifting from the disengagement state to the engagement state (i.e., the clutch pedal 13 is in the disengagement state) (No in step B4), the electronic control unit 30 determines whether or not the acceleration pedal 15 is depressed in step B14. When the acceleration pedal 15 is not depressed (No in step B14), the flow operation proceeds to step B17.

In a case where the acceleration pedal 15 is depressed (Yes in step B14) or the braking of the vehicle is shifting from the braking state to the release state (Yes in step B17), the electronic control unit 30 controls the engine 1 and the starter motor 4 to start the engine 1 in step B15.

After step B15 or in a case where the clutch pedal 13 is not shifting from the disengagement state to the engagement state (No in step B16), the electronic control unit 30 determines whether or not the clutch pedal 13 is shifting from the disengagement state to the engagement state in step B16. When the clutch pedal 13 is not shifting from the disengagement state to the engagement state (i.e., the clutch pedal 13 is in the disengagement state) (No in step B16), the flow operation returns to step B16 (i.e., the flow operation repeats step B16). On the other hand, when the clutch pedal 13 is shifting from the disengagement state to the engagement state (Yes in step B16), the flow operation proceeds to step B6.

In a case where the acceleration pedal 15 is not depressed (No in step B14) or the braking of the vehicle is not shifting from the braking state to the release state (No in step B17), the electronic control unit 30 determines whether or not the braking of the vehicle is shifting from the braking state to the release state in step B17. When the braking of the vehicle is not shifting from the braking state to the release state (No in step B17), the flow operation returns to step B17 (i.e., the flow operation repeats step B17). On the other hand, in a case where the braking of the vehicle is shifting from the braking state to the release state (Yes in step B17), the flow operation proceeds to step B15.

According to the second embodiment, the same effects as that of the first embodiment are obtained.

### [Third Embodiment]

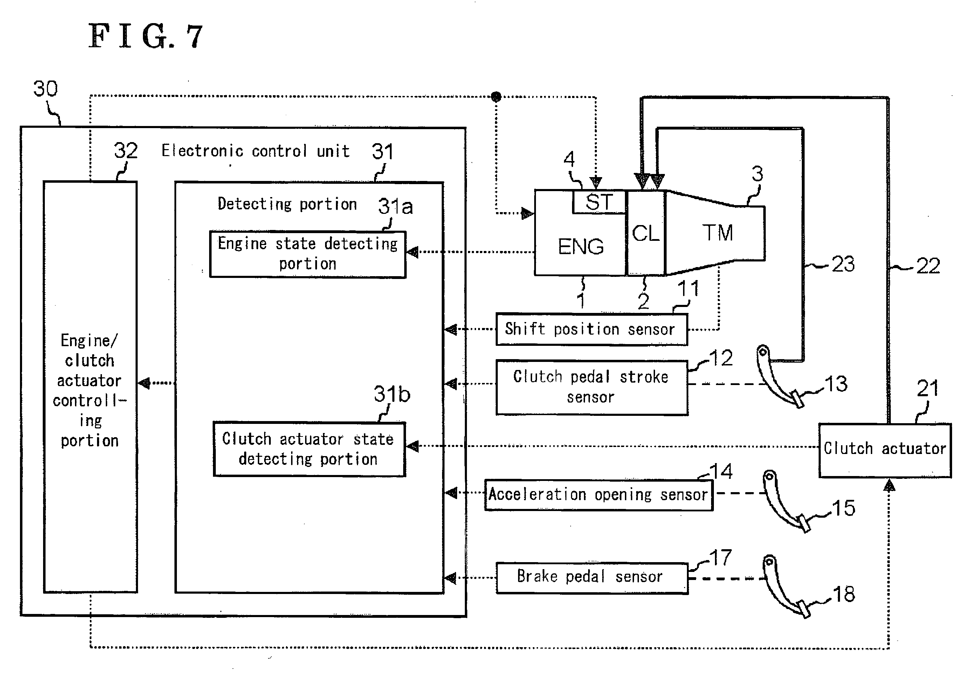

A third embodiment will be explained with reference to Fig. 7. Fig. 7 is a diagram schematically illustrating a structure of the clutch control apparatus according to the third embodiment.

The third embodiment that is a modification of the first embodiment includes a clutch operation passage 23 serving as a fourth operation passage through which the clutch 2 is operable by the clutch pedal 13 in addition to the clutch operation passage 22 serving as a third operation passage through which the clutch 2 is operable by the clutch actuator 21. The clutch operation passage 23 is a passage (i.e., a mechanism or an oil passage) for transmitting the operational force of the clutch pedal 13 to the clutch 2. The clutch operation passage 23 is arranged in parallel to the clutch operation passage 22 and is provided independently therefrom. The clutch 2 is operated on a basis of the operational force of either the clutch actuator 21 or the clutch pedal 13 whichever operates the clutch 2 further in the disengagement state. The operation of the electronic control unit 30 is different from that of the first embodiment because of the arrangement of the clutch operation passage 23. The operation of the electronic control unit 30 according to the third embodiment will be explained later. Other structures of the third embodiment are the same as those of the first embodiment.

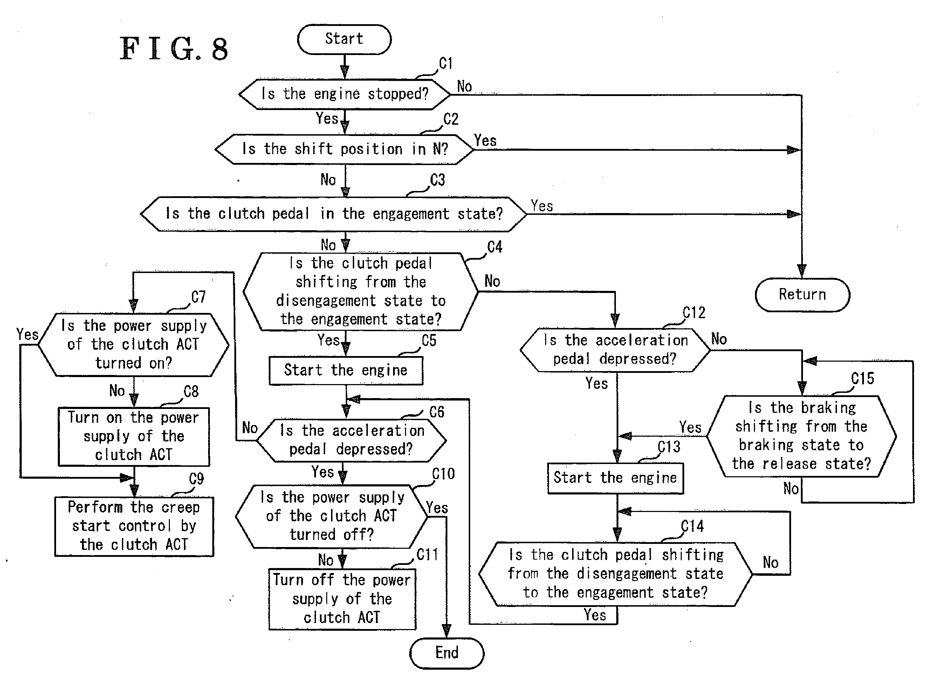

Next, the operation of the clutch control apparatus according to the third embodiment will be explained with reference to Fig. 8. Fig. 8 is a flowchart schematically illustrating the operation of the clutch control apparatus according to the third embodiment.

The electronic control unit 30 first determines whether or not the engine 1 is stopped in step C1. When the engine 1 is not stopped (No in step C1), the flow operation returns to step C1 (i.e., the flow operation repeats step C1).

When the engine 1 is stopped (Yes in step C1), the electronic control unit 30 determines whether or not the shift position of the transmission 3 is in the neutral range in step C2. In a case where the shift position is in the neutral range (Yes in step C2), the flow operation returns to step C1.

In a case where the shift position is not in the neutral range (No in step C2), the electronic control unit 30 then determines whether or not the clutch pedal 13 is in the engagement state in step C3. When the clutch pedal 13 is in the engagement state, the flow operation returns to step C1.

When the clutch pedal 13 is not in the engagement state (No in step C3), the electronic control unit 30 then determines whether or not the clutch pedal 13 is shifting from the disengagement state to the engagement state in step C4. When the clutch pedal 13 is not shifting from the disengagement state to the engagement state, the flow operation proceeds to step C12.

When the clutch pedal 13 is shifting from the disengagement state to the engagement state (Yes in step C4), the electronic control unit 30 controls the engine 1 and the starter motor 4 so as to start the engine 1 in step C5. After the start of the engine 1, the flow operation proceeds to step C6.

After step C5 or in a case where the clutch pedal 13 is shifting from the disengagement state to the engagement state (Yes in Step C14), the electronic control unit 30 determines whether or not the acceleration pedal 15 is depressed in step C6. When the acceleration pedal 15 is depressed, the flow operation proceeds to step C10.

In a case where the acceleration pedal 15 is not depressed (No in step C6), the electronic control unit 30 determines whether or not the power supply of the clutch actuator 21 is turned on in step C7. When the power supply of the clutch actuator 21 is turned on, the flow operation proceeds to step C9.

In a case where the power supply of the clutch actuator 21 is not turned on, the electronic control unit 30 controls the power supply of the clutch actuator 21 to be turned on in step C8. Thereafter the flow operation proceeds to step C9.

In a case where the power supply of the clutch actuator 21 is turned on (Yes in step C7) or after the process of step C8, the electronic control unit 30 controls the clutch actuator 21 (and possibly the engine 1) so that the creep start of the vehicle is obtained in step C9. The flow operation is thereafter terminated.

In a case where the acceleration pedal 15 is depressed (Yes in step C6), the electronic control unit 30 determines whether or not the power supply of the clutch actuator 21 is turned off in step C10. When the power supply of the clutch actuator 21 is turned off, the flow operation is terminated.

When the power supply of the clutch actuator 21 is not turned off (No in step C10), the electronic control unit 30 controls the power supply of the clutch actuator 21 to be turned off in step C11. The flow operation thereafter is terminated.

When the clutch pedal 13 is not shifting from the disengagement state to the engagement state (i.e., the clutch pedal 13 is in the disengagement state) (No in step C4), the electronic control unit 30 determines whether or not the acceleration pedal 15 is depressed in step C12. When the acceleration pedal 15 is not depressed, the flow operation proceeds to step C15.

When the acceleration pedal 15 is depressed (Yes in step C12), or the braking of the vehicle is shifting from the braking state to the release state (Yes in step C15), the electronic control unit 30 controls the engine 1 and the starter motor 4 to start the engine 1 in step C13.

After step C13 or in a case where the clutch pedal 13 is not shifting from the disengagement state to the engagement state (No in step C14), the electronic control unit 30 determines whether or not the clutch pedal 13 is shifting from the disengagement state to the engagement state in step C14. When the clutch pedal 13 is not shifting from the disengagement state to the engagement state, the flow operation returns to step C14 (i.e., the flow operation repeats step C14). On the other hand, when the clutch pedal 13 is shifting from the disengagement state to the engagement state, the flow operation proceeds to step C6.

In a case where the acceleration pedal 15 is not depressed or the braking of the vehicle is not shifting from the braking state to the release state (No in step C15), the electronic control unit 30 determines whether or not the braking of the vehicle is shifting from the braking state to the release state in step C15. When the brake pedal 18 is not shifting from the braking state to the release state, the flow operation returns to step C15 (i.e., the flow operation repeats step C15). On the other hand, when the braking of the vehicle is shifting from the braking state to the release state (Yes in step C15), the flow operation proceeds to step C13.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch control apparatus mountable at a vehicle where a clutch (2) is arranged at a power transmission passage between a transmission (3) and an internal combustion engine (1) that is driven on a basis of an operation of an acceleration pedal (15), the clutch control apparatus controlling the clutch, the clutch control apparatus comprising:
a controlling portion (30) in use controlling the internal combustion engine (1) which is in a stopped state to automatically start in a case where a shift position of the transmission (3) is not in a neutral range, and either a clutch pedal (13) that operates the clutch (2) to be in a connection state and a disconnection state is shifting from a disengagement state to an engagement state, the acceleration pedal (15) is depressed, or a braking of the vehicle is shifting from a braking state to a release state,
the controlling portion (30) in use controlling a clutch actuator (21) which is separately provided from the clutch pedal (13) in response to a depression of the acceleration pedal (15) at a time the clutch pedal (13) is shifting to the engagement state after the internal combustion engine (1) is automatically started, so that the operations of the clutch pedal (13) and the clutch actuator (21) are synchronized with each other
the controlling portion (30) in use controlling the clutch actuator to achieve a creep start of the vehicle in a case where the acceleration pedal (15) is not depressed at a time the clutch pedal (13) is shifting to the engagement state after the internal combustion engine (1) is automatically started.

2. The clutch control apparatus according to claim 1, further comprising an operation passage (22) between the clutch (2) and the clutch actuator (21) to transmit an operational force of the clutch actuator (21) to the clutch (2), wherein the operation passage (22) is prevented from being provided between the clutch (2) and the clutch pedal (13) for transmitting an operational force of the clutch pedal (13) to the clutch (2).

3. The clutch control apparatus according to claim 1, further comprising an operation passage switching device (26) that switches between first and second operation passages (24, 25) to transmit an operational force of either the clutch pedal (13) or the clutch actuator (21) to the clutch (2), wherein the operation passage switching device (26) selects the second operation passage (25) transmitting the operational force of the clutch pedal (13) to the clutch (2) in a case where a power supply of the clutch actuator (21) is turned off and selects the first operation passage (24) transmitting the operational force of the clutch actuator (21) to the clutch (2) in a case where the power supply of the clutch actuator (21) is turned on.

4. The clutch control apparatus according to claim 1, further comprising a third operation passage (22) between the clutch (2) and the clutch actuator (21) to transmit an operational force of the clutch actuator (21) to the clutch (2) and a fourth operation passage (23) between the clutch (2) and the clutch pedal (13) to transmit an operational force of the clutch pedal (13) to the clutch (2), wherein the clutch (2) is operated on a basis of the operational force of either the clutch actuator (21) or the clutch pedal (13) whichever operates the clutch (2) further in the disengagement state.

5. The clutch control apparatus according to one of claims 3 and 4, wherein the controlling portion (30) determines whether the power supply of the clutch actuator (21) is turned on in a case where the acceleration pedal (15) is not depressed, and controls the power supply of the clutch actuator (21) to be turned on in a state where the power supply of the clutch actuator (21) is turned off.

6. The clutch control apparatus according to any one of claims 3 through 5, wherein the controlling portion (30) determines whether the power supply of the clutch actuator (21) is turned off in a case where the acceleration pedal (15) is depressed, and controls the power supply of the clutch actuator (21) to be turned off in a state where the power supply of the clutch actuator (21) is turned on.

## Patentansprüche

1. Kupplungssteuervorrichtung, die an einem Fahrzeug montierbar ist, wobei eine Kupplung (2) an einem Leistungsübertragungsweg zwischen einem Getriebe (3) und einer Brennkraftmaschine (1) angeordnet ist, die auf Basis einer Betätigung eines Gaspedals (15) angetrieben wird, welche Kupplungssteuervorrichtung die Kupplung steuert und enthält:
einen Steuerteil (30), der im Betrieb die Brennkraftmaschine (1) steuert, die in einem gestoppten Zustand ist, um automatisch zu starten, in einem Fall, in dem eine Schaltstellung des Getriebes (3) nicht in einem Neutralbereich ist und entweder ein Kupplungspedal (13), das die Kupplung (2) betätigt, um in einem Verbindungszustand und einem gelösten Zustand zu sein, sich von einem Außereingriffszustand in einen Eingriffszustand bewegt, das Gaspedal (15) gedrückt ist, oder ein Bremsen des Fahrzeugs sich von einem Bremszustand in einen Freigabezustand verändert,
der Steuerteil (30) im Betrieb einen vom Kupplungspedal (13) getrennt vorhandenen Kupplungsaktuator (21) auf ein Drücken des Gaspedals (15) hin zu einem Zeitpunkt steuert, zu dem das Kupplungspedal (13) zu dem Eingriffszustand bewegt wird, nachdem die Brennkraftmaschine (1) automatisch startet, so dass der Betrieb des Kupplungspedals (13) und des Kupplungsaktuators (21) miteinander synchronisiert werden,
der Steuerteil (30) im Betrieb den Kupplungsaktuator steuert, um einen Kriechstart des Fahrzeugs in einem Fall zu erreichen, in dem das Gaspedal (13) nicht zu einem Zeitpunkt gedrückt ist, zu dem das Kupplungspedal (13) sich nach einem automatischen Start der Brennkraftmaschine (1) in den Eingriffszustand bewegt.

2. Kupplungssteuervorrichtung nach Anspruch 1, weiter enthaltend einen Betriebsweg (22) zwischen der Kupplung (22) und dem Kupplungsaktuator (21), um eine Betriebskraft des Kupplungsaktuators (21) auf die Kupplung (2) zu übertragen, wobei der Betriebsweg (22) daran gehindert ist, zwischen der Kupplung (2) und dem Kupplungspedal (13) vorhanden zu sein, um eine Betriebskraft des Kupplungspedals (13) auf die Kupplung (2) zu übertragen.

3. Kupplungssteuervorrichtung nach Anspruch 1, weiter enthaltend eine Betriebswegschaltvorrichtung (26), die zwischen einem ersten und einem zweiten Betriebsweg (24, 25) schaltet, um eine Betätigungskraft entweder des Kupplungspedals (13) oder des Kupplungsaktuators (21) auf die Kupplung zu übertragen, wobei die Betriebswegschaltvorrichtung (26) den zweiten Betriebsweg (25), der die Betätigungskraft des Kupplungspedals (13) auf die Kupplung (2) zu übertragen, in einem Fall wählt, in dem eine Energieversorgung des Kupplungsaktuators (21) abgeschaltet ist, und den ersten Betriebsweg (24), der die Betätigungskraft des Kupplungsaktuators (21) auf die Kupplung (2) überträgt, in einem Fall wählt, in dem die Energieversorgung des Kupplungsaktuators (21) angeschaltet ist.

4. Kupplungssteuervorrichtung nach Anspruch 1, weiter enthaltend einen dritten Betriebsweg (22) zwischen der Kupplung (2) und dem Kupplungsaktuator (21), um eine Betätigungskraft des Kupplungsaktuators (21) auf die Kupplung (2) zu übertragen, und einen vierten Betriebsweg (23) zwischen der Kupplung (2) und dem Kupplungspedal (13), um eine Betätigungskraft des Kupplungspedals (13) auf die Kupplung (2) zu übertragen, wobei die Kupplung (2) auf Basis der Betätigungskraft entweder des Kupplungsaktuators (21) oder des Kupplungspedals (13) betätigt wird, je nachdem, wer die Kupplung (2) weiter in den Außereingriffszustand bewegt.

5. Kupplungssteuervorrichtung nach einem der Ansprüche 3 und 4, wobei der Steuerteil (30) bestimmt, ob die Energieversorgung des Kupplungsaktuators (21) angeschaltet ist, in einem Fall, in dem das Gaspedal (15) nicht gedrückt ist, und ein Anschalten der Energieversorgung des Kupplungsaktuators (21) in einem Fall steuert, in dem die Energieversorgung des Kupplungsaktuators (21) abgeschaltet ist.

6. Kupplungssteuervorrichtung nach einem der Ansprüche 3 bis 5, wobei der Steuerteil (30) bestimmt, ob die Energieversorgung des Kupplungsaktuators (21) abgeschaltet ist, in einem Fall, in dem das Gaspedal (15) gedrückt ist, und ein Abschalten der Energieversorgung des Kupplungsaktuators (21) steuert in einem Zustand, in dem die Energieversorgung des Kupplungsaktuators (21) angeschaltet ist.

## Revendications

1. Appareil de commande d'embrayage pouvant être monté dans un véhicule où un embrayage (2) est disposé dans un passage de transmission de puissance entre une transmission (3) et un moteur à combustion interne (1) qui est entraîné sur la base d'un actionnement d'une pédale d'accélération (15), l'appareil de commande d'embrayage commandant l'embrayage, l'appareil de commande d'embrayage comprenant :
une partie de commande (30) en service commandant au moteur à combustion interne (1) qui est dans un état arrêté de démarrer automatiquement quand une position de changement de rapport de la transmission (3) n'est pas dans une plage neutre, et soit une pédale d'embrayage (13) qui actionne l'embrayage (2) pour qu'il soit dans un état de connexion et un état de déconnexion change d'un état de désaccouplement dans un état d'accouplement, la pédale d'accélération (15) est enfoncée, soit un freinage du véhicule passe d'un état de freinage à un état de libération,
la partie de commande (30) en service commandant un actionneur (21) d'embrayage qui est prévu séparé de la pédale d'embrayage (13) en réponse à un enfoncement de la pédale d'accélération (15) à un moment où la pédale d'embrayage (13) passe dans l'état d'accouplement après que le moteur à combustion interne (1) a été automatiquement démarré de sorte que le fonctionnement de la pédale d'embrayage (13) et de l'actionneur (21) d'embrayage sont synchronisés l'un avec l'autre,
la partie de commande (30) en service commandant l'actionneur d'embrayage pour réaliser un démarrage à vitesse très lente sous charge du véhicule dans le cas où la pédale d'accélération (15) n'est pas enfoncée à un moment où la pédale d'embrayage (13) passe à l'état d'accouplement après que le moteur à combustion interne (1) a été automatiquement démarré.

2. Appareil de commande d'embrayage selon la revendication 1, comprenant en outre un passage d'opération (22) entre l'embrayage (2) et l'actionneur (21) d'embrayage pour transmettre une force opérationnelle de l'actionneur (21) d'embrayage à l'embrayage (2), le passage d'opération (22) étant empêché de transmettre entre l'embrayage (2) et la pédale d'embrayage (13) une force opérationnelle de la pédale d'embrayage (13) à l'embrayage (2).

3. Appareil de commande d'embrayage selon la revendication 1, comprenant en outre un commutateur (26) de passage d'opération qui change entre des premier et deuxième passages d'opération (24, 25) pour transmettre une force opérationnelle soit de la pédale d'embrayage (13) soit de l'actionneur (21) d'embrayage à l'embrayage (2), dans lequel le commutateur (26) de passage d'opération sélectionne le deuxième passage d'opération (25) transmettant la force opérationnelle de la pédale d'embrayage (13) à l'embrayage (2) dans un cas où une alimentation en énergie de l'actionneur (21) d'embrayage est coupée et sélectionne le premier passage d'opération (24) transmettant la force opérationnelle de l'actionneur (21) d'embrayage à l'embrayage (2) dans un cas où l'alimentation en énergie de l'actionneur (21) d'embrayage est ouverte.

4. Appareil de commande d'embrayage selon la revendication 1, comprenant en outre un troisième passage d'opération (22) entre l'embrayage (2) et l'actionneur (21) d'embrayage pour transmettre une force opérationnelle de l'actionneur (21) d'embrayage à l'embrayage (2) et un quatrième passage d'opération (23) entre l'embrayage (2) et la pédale d'embrayage (13) pour transmettre une force opérationnelle de la pédale d'embrayage (13) à l'embrayage (2), dans lequel l'embrayage (2) est actionné sur la base de la force opérationnelle soit de l'actionneur (21) d'embrayage soit de la pédale d'embrayage (13) quel que soit celui qui manoeuvre l'embrayage (2) dans l'état de désaccouplement.

5. Appareil de commande d'embrayage selon une des revendications 3 et 4, dans lequel la partie de commande (30) détermine si l'alimentation en énergie de l'actionneur (21) d'embrayage est ouverte dans un cas où la pédale d'accélération (15) n'est pas enfoncée, et commande à l'alimentation en énergie de l'actionneur (21) d'embrayage d'être ouverte dans un état où l'alimentation en énergie de l'actionneur (21) d'embrayage est coupée.

6. Appareil de commande d'embrayage selon l'une quelconque des revendications 3 à 5, dans lequel la partie de commande (30) détermine si l'alimentation en énergie de l'actionneur (21) d'embrayage est coupée dans un cas où la pédale d'accélérateur (15) est enfoncée, et commande à l'alimentation en énergie de l'actionneur (21) d'embrayage d'être coupée dans un état où l'alimentation en énergie de l'actionneur (21) d'embrayage est ouverte.
